# EUROPÄISCHE PATENTSCHRIFT

(11) **EP 3 336 274 B1**
(45) Veröffentlichungstag und Bekanntmachung des Hinweises auf die Patenterteilung: **14.10.2020**
(21) Anmeldenummer: 17206932.0
(22) Anmeldetag: 13.12.2017
(51) Int. Cl.: E04C 2/52, E04C 1/39, F24D 3/14

(54) **WAND FÜR EIN GEBÄUDE**
WALL FOR A BUILDING
MUR DE BÂTIMENT

(30) Priorität: 14.12.2016 AT 511352016
(43) Veröffentlichungstag der Anmeldung: 20.06.2018
(73) Patentinhaber: Thoma, Erwin, 5600 St. Johann/Pongau (AT)
(72) Erfinder: Thoma, Erwin, 5600 St. Johann/Pongau (AT)
(74) Vertreter: Babeluk, Michael

(56) Entgegenhaltungen:
- EP-A1- 2 787 140
- WO-A1-2007/012213
- WO-A1-2014/192033
- DE-A1- 1 501 531
- DE-A1- 19 646 812
- DE-A1-102007 052 455

## Beschreibung

Die Erfindung betrifft eine Wand für ein Gebäude, wobei die Wand mehrere Schichten aufweist mit zumindest einer Holzschicht und mit zumindest einer Trägerschicht aus im Wesentlichen anorganischem Material wobei zwischen Trägerschicht und Holzschicht eine Verbindungsschicht angeordnet ist und die Verbindungsschicht Leitungen zum Wärmeaustausch enthält und die Verbindungsschicht eine thermisch leitfähige Gussschicht wie Vergussbeton aufweist.

Sie betrifft auch ein Verfahren zur Fertigung einer Gebäudehülle mit mehreren Schichten, bei dem zunächst eine Trägerschicht aus im Wesentlichen anorganischem Material hergestellt wird, danach darauf eine Holzschicht aufgebracht wird, wobei zwischen der Trägerschicht und der Holzschicht Leitungen zum Wärmeaustausch angeordnet werden, wobei in einen Hohlraum zwischen Holzschicht, Distanzelementen und Trägerschicht eine thermisch leitfähige Gussschicht vergossen wird.

Wände aus mehreren Schichten mit wenigstens einer Holzschicht und einer Trägerschicht aus anorganischem Material sind im Allgemeinen bekannt. Dabei werden beispielsweise zur Verbesserung des optischen Erscheinungsbildes auf Ziegelwände oder Stahlbetonwände Holzpaneele, Schindeln oder Latten aufgebracht. Dabei kommt der Holzschicht jedoch oft nur eine optische Bedeutung zu. Unter Wänden verstehen sich hier alle wandförmigen Bauelemente, die senkrecht, waagrecht oder schief angeordnet sein können. Diese Wände schließen auch Bodenplatten und Decken oder Dachplatten mit ein.

Die anorganische Trägerschicht ist im einfachsten Fall eine Ziegelmauer, wobei diese Ziegelmauer auch mit organischem Material gefüllt oder durchzogen sein kann. Ebenso kann die Trägerschicht aus Beton, oder Stahlbeton wie auch nur aus metallischem Grundmaterial bestehen. Die Trägerschicht kann ebenso eine Steinmauer, oder auch eine Lehmmauer sein, sowie Mischungen daraus, wie es bei alten Gebäuden oft der Fall ist.

Die DE 10 2007 052 455 A1 zeigt einen Wandaufbau, welcher eine Holzschicht und eine anorganische Schicht aufweist. Dazwischen wird Dämmmaterial angeordnet, um eine stärkere Isolation zu gewährleisten.

Aus der DE 20 2005 019 680 U1 ist ein Blockhaus mit einer Ziegelmauer und einer Holzwand bekannt. Dabei sind Ziegelmauer und Holzwand über Balken verbunden. Die Ziegelmauer ist dabei jedoch ungünstigerweise außerhalb der Holzwand angeordnet, um die Holzwand vor Witterungseinflüssen zu schützen. Das ist einerseits optisch nicht schön, da auch die Ziegelmauer zumindest verputzt werden muss, andererseits ist die thermische Leitfähigkeit von der Ziegelmauer höher, als die Leitfähigkeit der Holzwand. Dadurch ist an der Innenseite der Ziegelwand die Temperatur relativ niedrig, wodurch sie unterhalb des Taupunktes fallen kann. Dies führt zu Schimmelbildung, Fäulnis und ähnlichen unerwünschten Erscheinungen. Außerdem wird die Wärmekapazität der Trägerschicht nicht genutzt, da sie sich hinter der Holzwand befindet. Ähnlich ungünstig in Bezug auf die Wärmekapazität ist auch die Lösung, wie sie in der EP 2 787 140 A1 beschrieben wird.

In der EP 1 387 017 A1 und der DE 26 36 531 A1 werden ebenso Wandaufbauten mit unterschiedlichen Schichten beschrieben. Jedoch handelt es sich hier im Wesentlichen um Holzplatten, welche beabstandet angeordnet und miteinander vergossen werden. Dies ist thermisch ebenso ungünstig, da die unterschiedlichen thermischen Vorteile der unterschiedlichen Schichten nicht ausgenützt werden können.

In der DE 10 2007 052 596 A1 werden Zellstoffverbundelemente beschrieben, welche zwischen zwei Schichten aus Zellstoff Leitungen für eine Heizung oder Kühlung vorsehen. Dies ermöglicht einen Wärmeaustausch mit dem Innenraum, der Isolationswert der Zellstoffschichten ist jedoch in Richtung Innenraum des Gebäudes genauso hoch wie in Richtung Außenraum. Daher müssen außerhalb noch weitere Isolationsschichten aufgebracht werden, um einen zu großen Wärmeverlust zu vermeiden.

In der WO 2014/192033 A1 und der DE 196 46 812 A1 werden Wandaufbauten offenbart, welche Leitungen zur Heizung zwischen einer Trägerschicht und einer Holzschicht aufweist. Damit wird eine gute Temperaturregelung des Raumes ermöglicht. Jedoch ist ein Zusammenbau solcher Wandaufbauten schwierig, da es zu einem Zusammendrücken der Leitungen während des Aufbaus kommen kann. Dies kann die Leitungen beschädigen. Darum werden die Leitungen in der Regel zuerst mit Klammern oder Aluminiumblechen an eine Wandschicht angebracht, um danach die anderen Wandschichten aufzutragen. Dies ist nachteilig, da es so zu Wärmebrücken durch die Klammern oder Aluminiumbleche kommen und die Wärmeübertragung unvorteilhaft beeinflusst werden kann. Außerdem muss so die Leitung direkt an der einen Wandschicht anliegen, was bei dickeren oder mehrschichtigen Wandaufbauten nicht unbedingt gewünscht ist. Darüber hinaus ist die Leitungsführung durch die Form und Anordnung der Klammern im Wesentlichen festgelegt und ermöglicht keine individuelle Anpassung vor Ort.

Aufgabe der Erfindung ist damit, eine Wand und ein entsprechendes Verfahren zur Fertigung einer Gebäudehülle bereitzustellen, welche eine regelmäßige Beabstandung der Holzschicht von der Trägerschicht zu gewährleisten und somit einen verbesserten Wärmeaustausch zu ermöglichen.

Dies wird erfindungsgemäß dadurch erfüllt, dass die Holzschicht von der Trägerschicht mit Distanzelementen beabstandet ist und dass die Distanzelemente zumindest teilweise als Holzschrauben aus Holz ausgeführt sind, die als Verbindungselemente in der Holzschicht vorgesehen sind, und/oder die Distanzelemente zumindest teilweise als Dübel ausgeführt sind, die als Verbindungselemente in der Holzschicht vorgesehen sind, wobei die Dübel aus Holz hergestellt sind. Sie wird auch dadurch gelöst, dass vor dem Anbringen der Holzschicht auf die Trägerschicht die Holzschicht mit Distanzelementen mit kleiner Querschnittsfläche bestückt wird und dass bei der Bestückung der Holzschicht als Distanzelemente entweder aus Holz bestehende Dübel oder Holzschrauben aus Holz verwendet werden.

Durch das Anbringen von Leitungen, welche den Raum indirekt über die Trägerschicht heizen und/oder kühlen können, wird das Raumklima weiter verbessert. Außerdem kann durch diese Konstruktion gänzlich oder teilweise auf konventionelle Heizstrahler im Innenraum des Gebäudes verzichtet werden, wodurch mehr freie Wandflächen entstehen. Dadurch kann der Wohnraum besser genutzt werden. Außerdem wird durch die Verwendung von Holz als Isolator eine besonders umweltfreundliche Bauweise gewählt, da so keine biologisch kaum abbaubaren Kunststoffmaterialien zur Dämmung verwendet werden müssen. Gleichzeitig hat Holz nicht nur gute isolatorische Eigenschaften, sondern ist optisch ansprechender als sonst gängige Isolationsmittel wie Dämmwolle. Es kann sowohl im Innenraum als dekorative Wandverkleidung die Optik verbessern, aber auch außen angebracht das Aussehen des Gebäudes aufwerten.

Diese Lösung ist darüber hinaus nicht nur zum Bau einer neuen Wand geeignet, sondern auch zur Sanierung bestehender Wände.

Bei Beheizung des Raumes bei niedrigen Außentemperaturen durch die beschriebenen Leitungen wird außerdem durch die Temperaturerhöhung im Bereich zwischen Holzschicht und Trägerschicht die Gefahr minimiert, dass die Temperatur unter den Taupunkt fällt. Zusätzlich wird die Trägerschicht getrocknet. Dies minimiert das Risiko von Schimmelbildung oder ähnlichen unerwünschten Veränderungen.

Die Holzschicht kann, muss aber nicht statisch tragende Funktion haben. Je nach Ausführungsform der Schichten und je nach Anforderung im konkreten Fall kann die Holzschicht auch nur statisch unterstützend wirken oder keine statische Funktion haben.

Durch die Anordnung einer Wärme isolierenden Holzschicht an die Außenseite der Trägerschicht werden die Vorteile beider Materialien optimal genutzt. Die im Allgemeinen geringe Wärmedämmung der Trägerschicht ist durch die guten Isoliereigenschaften der Holzschicht von geringer Bedeutung. Durch die starke Isolation der Holzschicht wird gleichzeitig der Temperaturunterschied an der inneren und äußeren Seite der Trägerschicht vermindert, und dadurch wird die Wärmekapazität dieser ideal genutzt.

Außerdem wird dadurch das Feuchtemanagement optimiert, da die Feuchteaufnahme- und Feuchteabgabefähigkeit der Trägerschicht erhöht wird, was sich positiv auf das Raumklima des Gebäudes auswirkt.

Besonders vorteilhaft ist es, wenn sich die Leitungen über den Großteil eines Längsschnittes der Wand erstrecken. Dadurch wird der Wirkungsgrad des Wärmeaustausches optimiert. Es sind verschiedenste Formen der Verlegung der Leitungen denkbar. So können klassische Mäanderformen verwendet werden, als auch rundliche oder eckige Spiralformen. Es können auch an thermisch besonders wichtigen Bereichen wie zum Beispiel Ecken oder um Fensterrahmen die Intensität der Leitungsbestückung verändert werden. Beispielsweise können die Leitungen besonders dicht um Dachbodenschächte, Fenster- und Türrahmen herumgeführt werden. Es ist auch möglich den Querschnitt der Leitungen an bestimmten Stellen anzupassen, um den Leistungsgrad zu optimieren. So können stellenweise abgeflachte Leitungen verwendet werden um die Wirkoberfläche zu vergrößern.

Besonders vorteilhaft ist, den Wärmeaustausch durch ein hydraulisches System zu ermöglichen. Durch die Verbindung der Leitungen mit einer hydraulischen Heiz- bzw. Kühleinrichtung ist eine energieeffiziente und kostengünstige Lösung zur Beheizung bzw. Kühlung des Innenraumes gefunden.

Dadurch kann an der Innenseite der Wand zum Innenraum hin auf teure Heiztechnik verzichtet werden. Die innere Wandoberfläche ersetzt dann platzaufwändige und teure Radiatoren oder andere Einrichtungen und dient als Heiz- und Kühlflächen. Die Heizung und Kühlung durch Strahlung und natürliche Konvektion ist zudem für den menschlichen Körper verträglicher und angenehmer als durch Lufterwärmung und Luftbewegung.

In der Verbindungsschicht können neben den Leitungen zum Wärmeaustausch auch elektrische Leitungen und Wasserleitungen verlegt werden. Auch die Anordnung von Lüftungsrohren und Installationen aller Art sind in der Verbindungsschicht möglich. Auch hier können Dübel als Befestigungselemente dienen.

Das ist besonders bei Sanierungen von Vorteil, weil dadurch neue Haustechnik installiert werden kann ohne Bewohner zu stören. Diese können während der Sanierung sogar im Gebäude verbleiben. Des Weiteren ist es dadurch möglich, dass öffentliche Gebäude wie Schulen, Krankenhäuser, oder Wohnungen und Büros während des normalen Betriebes die Haustechnik zu Modernisierern oder zu Sanieren oder in der beschriebenen Form umzurüsten.

Um eine regelmäßige Beabstandung der Holzschicht von der Trägerschicht zu gewährleisten kann es vorteilhaft sein Distanzelemente vorzusehen, welche die Distanz zwischen Trägerschicht und Holzschicht stets gleich groß halten. Diese Distanzelemente können entweder nur an Trägerschicht oder Holzschicht angebracht sein und an der jeweils anderen bloß aufliegen. Sie können aber auch mit beiden dauerhaft verbunden sein.

Diese Distanzelemente können günstigerweise auch als Befestigungsmöglichkeit für die Leitungen in der Verbindungsschicht dienen.

Als vorteilhaft ist herauszustreichen, die Distanzelemente zumindest teilweise als Dübel auszuführen. Dadurch wird an potentiell giftigen oder umweltschädlichen Klebern oder rostanfälligen Schrauben gespart. Besonders vorteilhaft ist auch die Verwendung von Holzdübeln, da so eine besonders nachhaltige Bauweise ermöglicht wird. Dübel aus Holz weisen im Vergleich zu der Holzschicht ähnliche thermische Leitwerte auf und bilden daher im Gegensatz zu Schrauben, welche nicht aus Holz sind keine Kältebrücke. Es ist bevorzugt aber auch die zumindest teilweise Verwendung von Holzschrauben als Distanzelemente möglich, die ebenfalls den Vorteil der Einstofflichkeit bieten.

Werden Distanzelemente verwendet, so ist es sinnvoll, die Leitungen um die Distanzelement herum anzuordnen, um einerseits einen Oberflächenverlust der Leitungen durch die Distanzelemente möglichst gering zu halten und andererseits Beschädigungen der Leitungen durch die Distanzelemente zu verhindern.

Um den Wirkungsgrad des Wärmeaustausches zu erhöhen ist vorgesehen, dass zumindest ein Teil der Verbindungsschicht als Gussschicht mit guter thermischer Leitfähigkeit ausgeführt wird. Dadurch können die Leitungen mit der Trägerschicht und/oder der Holzschicht zumindest teilweise thermisch gekoppelt werden und der Wärmefluss optimiert werden. Gleichzeitig kann die Bildung von Kondenswasser direkt an den Leitungen verhindert werden, was das Risiko von mikrobiellen Befall wie Schimmelbildungen weiter zu verringern. Weiters bietet diese Anordnung eine erhöhte Stabilität der gesamten Wandkonstruktion. Das Material zum Vergießen kann unterschiedlich gewählt werden. So ist besonders Vergussbeton dafür geeignet, allerdings sind auch viele andere Materialien wie Kunststoffe oder mineralische Stoffe wie Gips denkbar.

Manchmal ist es günstig zumindest Teile der äußersten Bereiche der Wand vor der Witterung durch eine zusätzliche Schicht zu schützen. Deswegen kann es erstrebenswert sein eine Fassadenschicht vorzusehen. Je nach Art des Gebäudes bzw. Witterungseinflüssen kann diese Fassade auch nur an Teilen der Wand, beispielsweise an bodennahen Bereichen erfolgen, um die Holzoptik in gewissen anderen Bereichen zu wahren. Sie kann auch statische Funktionen übernehmen, wie zum Beispiel die Stabilisierung der Dämmung.

Die Fassadenschicht kann prinzipiell aus allen herkömmlichen oder dafür geeigneten Fassadenaufbauten bestehen. Somit kann sie sich beispielsweise aus Putz auf einen Putzträger, Holzschalungen aller Art, Kunststoff, Stein, Glas oder anderen Materialen handeln, direkt oder mit Hilfe geeigneter Trägersysteme an die Wandkonstruktion aufgebracht. Eine Hinterlüftung kann auch vorgesehen werden. Besonders vorteilhaft ist das Anbringen von Schallschutzelementen, zum Beispiel Holzbeton. Prinzipiell können auch vorgefertigte Module verwendet werden, welche einfach und schnell, gegebenenfalls nach Anpassung vor Ort, auf die Wandkonstruktion aufgebracht werden, wodurch eine besonders kostengünstige, schnelle und einfach Bauweise möglich wird.

Da der optimalen Dämmung große Wichtigkeit zukommt, kann es von Vorteil sein eine weitere Dämmschicht vorzusehen. Diese kann zum Beispiel direkt unter einer Fassadenschicht liegen, aber auch an anderen Stellen angeordnet sein. Aus Stabilitätsgründen kann es vorteilhaft sein, Stützelemente in die Dämmschicht einzubauen. Diese können selbstständig an die jeweils angrenzenden Schichten befestigt sein, wie zum Beispiel genagelt, geschraubt oder auf in die Dämmschicht eindringenden Dübeln aufliegend. Für die Ausgestaltung von Stützelementen dieser Art sind unterschiedliche Materialien wie zum Beispiel Holz oder Kunststoff denkbar. Sie können neben ihrer stützenden Funktion auch als Distanzelement oder als Absinkhemmung für das Dämmmaterial dienen. Dazu ist es besonders vorteilhaft, wenn sie als besonders vorzugsweise im Wesentlichen horizontal verlaufenden Kanthölzer, bzw. Balken ausgeführt sind.

Um die Stabilität der Wand zu erhöhen ist es vorteilhaft, Verbindungselemente vorzusehen, welche die Holzschicht und die Trägerschicht miteinander verbinden. Besonders in Kombination mit Distanzelementen und/oder der Gussschicht kann dies zu einer hohen Festigkeit der Wandkonstruktion führen.

Besonders günstig ist es, wenn die Holzschicht zumindest ein vorgefertigtes, vorzugsweise einstoffliches Schichtholzelement aufweist, mit zumindest drei miteinander verbundenen Lagen von unmittelbar nebeneinander angeordneten brett-oder pfostenartigen Hölzern, von denen zumindest zwei benachbarte Lagen jeweils unterschiedliche Richtungen aufweisen, wobei die Lagen jeweils durch Dübel verbunden sind, welche die Lagen von Hölzern im Wesentlichen normal durchsetzen, wobei zumindest eine innere Lage durch Pfosten gebildet ist. Aufgrund der Beschaffenheit dieses Schichtholzelementes, das im Idealfall nur aus Holz besteht und eine relativ dicke Holzschicht bildet, kann die Brandsicherheit erhöht werden. Im Falle eines Brandes verhalten sich solche Schichtholzelemente nämlich ähnlich Vollholzelementen, d.h. sie zeichnen sich durch eine hohe Feuerfestigkeit aus. Außerdem ist der Einbau durch standardisierte Elemente vereinfacht.

Weitere bekannte Vorteile solcher Schichtholzelemente können durch deren Verwendung zusätzlichen Nutzen bringen. So bringen die hohe Schall- und Wärmedämmung durch solche Platten sowie die hervorragenden bauphysikalischen Eigenschaften eine weitere Verbesserung mit sich.

Durch entsprechende Schaltung der Leitungen können Wärmeaustauschkreise gebildet werden, welche voneinander unabhängig ein- und ausgeschalten werden können. So können dadurch zum Beispiel einzelne Wände, oder auch einzelne Innenräume geheizt bzw. gekühlt werden und so unnötiger Energieverbrauch verhindert werden.

Aus Sicht des Umweltschutzes und des Recyclings ist es günstig, wenn das Schichtholzelement einstofflich ist. Weiters wird so verhindert, dass im Brandfall toxische Gase entstehen.

Um die Montage der Schichtholzelemente zu erleichtern ist es günstig, wenn das Schichtholzelement zumindest eine Verbindungskante aufweist und dadurch mit zumindest einem benachbarten Schichtholzelement verbindbar ist mit vorzugsweise einer Nut/Feder, oder über Blattung, Schwalbenschwanz und/oder Schrauben. Dadurch können die Schichtholzelemente handlicher und kleiner, sowie leichter ausgeführt werden und durch einfaches und sicheres Verbinden entlang der Verbindungskante kann trotzdem die gesamte Trägerschicht am Gebäude abgedeckt werden.

Um durch die Holzschicht alleine eine gute Dämmwirkung zu erreichen, ist es günstig, wenn die Stärke der Lagen des Schichtholzelementes von außen nach innen zunimmt und die Stärken der Lagen vorzugsweise zwischen etwa 8 mm und 120 mm betragen.

Allerdings ist zu betonen, dass die Holzschicht auch anders aufgebaut sein kann und die beschriebene Ausführungsform mit Schichtholzelementen bloß eine bevorzugte Variante darstellt. So kann es sich zum Beispiel auch um verschraubte, keilverzinkte oder vernagelte Wandelemente, verleimte Brettsperrholzplatten oder auch um Holzschichten handeln, welche zum Teil mit anderen Baustoffen behandelt oder angereichert wurden. So wären beispielsweise Holzschichten mit Textil-oder Melasseeinlagen denkbar.

Die Erfindung betrifft auch ein Verfahren zur Fertigung einer Gebäudehülle mit mehreren Schichten, bei dem zunächst eine Trägerschicht aus im Wesentlichen anorganischem Material hergestellt wird, danach darauf eine Holzschicht aufgebracht wird.

Die gestellte Aufgabe wird darüber hinaus auch dadurch erfüllt, dass die Holzschicht auf die Trägerschicht aufgebracht wird und dass vor und/oder nach dem Aufbringen der Holzschicht Leitungen an der Trägerschicht und/oder an der Holzschicht angeordnet werden. Dadurch kann im Idealfall das Unterschreiten des Taupunktes und somit das Auskondensieren des Wassers im Inneren der Wandkonstruktion verhindert werden. Die Trägerschicht, beziehungsweise eine schon bestehende Ziegelmauer des Gebäudes kann für Renovierungsarbeiten einfach um diese Leitungen und die Holzschicht erweitert werden, ohne dass große Eingriffe zerstörerischer Natur notwendig wären. Somit kann selbst auf schon bestehende alte Mauerwerke nachträglich sehr einfach, kostengünstig und schnell eine umweltfreundliche Wärmedämmung aufgebracht werden. Für Neubauten ist der Effekt umso größer, da die Trägerschicht schon beim Bau darauf ausgerichtet werden kann, dass die Holzschicht und die Leitungen in einem weiteren Schritt mit ihr verbunden werden. Durch die vorfertigbare Holzschicht erfolgt die Montage besonders schnell und günstig. Es kann vorteilhaft sein, die Leitungen auf die Holzschicht aufzubringen bevor die Holzschicht auf die Trägerschicht aufgebracht wird. Dadurch wird der Verbindungsschritt der Holz- und Trägerschicht weiter vereinfacht und kann schneller durchgeführt werden. Es kann günstig sein die Leitungen an der Holzschicht mit einer Schutzschicht zu schützen um Beschädigungen zu verhindern. Dies trifft besonders dann zu, wenn der Schritt der Aufbringung der Leitungen und der Schritt der Aufbringung der Holzschicht auf die Trägerschicht an unterschiedlichen Orten und/oder nicht direkt hintereinander erfolgen.

Besonders einfach, schnell und kostengünstig, kann dieser Schritt zur Verbindung der Holzschicht mit der Trägerschicht durchgeführt werden, wenn vor dem Anbringen der Holzschicht auf die Trägerschicht, die Holzschicht mit Distanzelementen mit kleiner Querschnittsfläche bestückt wird. Durch diese Distanzelemente muss auf einen vorbestimmten Abstand zwischen Holzschicht und Trägerschicht durch den, die Montage durchführenden Fachmann keine Rücksicht mehr genommen werden. Die Ausrichtung der Holzschicht erübrigt sich durch die Distanzelemente.

Um den Wärmeaustausch von den Leitungen zu einer Umgebung außerhalb der Wand zu erleichtern und zu verbessern, ist es günstig, dass in einen Hohlraum zwischen Holzschicht, Distanzelementen und Trägerschicht zumindest teilweise eine thermisch leitfähige Gussschicht vergossen wird.

Um die isolierende Wirkung der Holzschicht noch weiter zu unterstützen, und Materialkosten zu sparen ist es günstig, wenn vor und/oder nach dem Aufbringen der Holzschicht eine weitere Dämmschicht vorzugsweise durch den Einsatz von kostengünstigen biologisch abbaubaren Dämmstoffen auf die Holzschicht aufgebracht wird.

Um die optische Wirkung des Gebäudes zu verbessern ist es vorteilhaft, wenn vor und/oder nach dem Aufbringen der Holzschicht eine Fassadenschicht auf eine Außenseite der Holzschicht - vorzugsweise auf die weitere Dämmschicht - aufgebracht wird. Dadurch ist es auch möglich, dem Gebäudeinhaber unabhängig vom Aufbau der Wand und unabhängig vom Verfahren freie Wahl bei der Gestaltung des Erscheinungsbildes des Gebäudes zu lassen. Weiters ist die Wandkonstruktion vor Witterungseinflüssen noch besser geschützt. Es ist vorteilhaft, wenn zur Baustelle schon fertig vorgeschnittene Elemente geliefert werden und nur noch der Einbau erfolgen muss. Es ist auch möglich, diese Elemente entsprechend vor Ort zuzuschneiden, beziehungsweise Details von vorgefertigten Elementen direkt an der Baustelle anzupassen. Dadurch können teure Baustellenstunden vermieden werden. Dabei ist es günstig, wenn die Holzschicht mit herausstehenden Dübeln und Verbindungselementen sowie mit an der Holzschicht, oder an den Dübeln beziehungsweise an den Distanzelementen befestigten Leitungen im Werk vorgefertigt werden und dann auf die Baustelle gebracht werden und nur noch mit der Verbindungsschicht an die Trägerschicht angebracht werden.

In der Folge wird die vorliegende Erfindung anhand der in den Figuren dargestellten Ausführungsvarianten näher erläutert. Es zeigen:
- Fig. 1: einen Schnitt durch eine erfindungsgemäße Wand nach einer Ausführungsvariante mit einseitig überstehenden Stabdübeln;
- Fig. 2: einen Schnitt durch eine erfindungsgemäße Wand nach einer anderen Ausführungsvariante mit beidseits überstehenden Stabdübeln; und
- Fig. 3: schematisch eine Schrägansicht eines Schichtholzelementes.

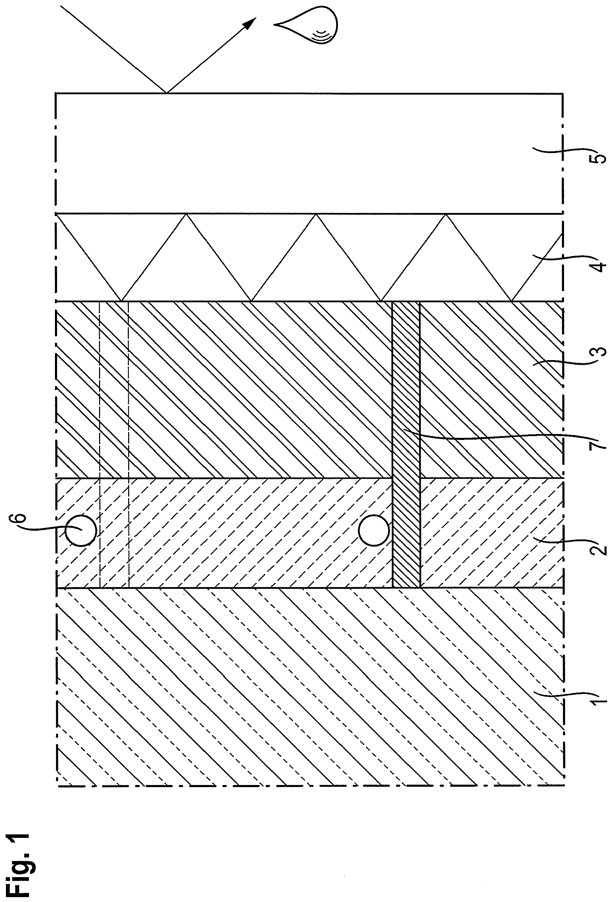

Figur 1 zeigt eine Ausführungsvariante mit einseitig überstehenden Stabdübel. Die Trägerschicht 1 und die Holzschicht 3 sind über Dübel 7 in Form von Stabdübel voneinander beabstandet. Die Dübel 7 dringen in die Trägerschicht 1 nicht ein, sondern liegen bloß auf ihr auf. Es sind zwei Reihen von Dübeln 7 dargestellt, wobei die Dübel 7 in den Reihen gegenseitig versetzt sind. Dazwischen eröffnet sich die Verbindungsschicht 2, in der Leitungen 6 verlegt sind. Sie sind besonders nahe den Dübel 7 verlegt und sind an den Dübeln 7 befestigt, beziehungsweise an der Holzschicht 3 befestigt. Das bringt den Vorteil, dass die Leitungen sehr einfach befestigt werden können, im Gegensatz zu einer komplizierten Befestigung an einer Steinwand. Die Verbindungsschicht 2 ist durch Vergussbeton ausgegossen. Die Holzschicht 3 ist durch ein Schichtholzelement 9 realisiert. An die Holzschicht 3 schließt eine zusätzliche Dämmschicht 4 an, die durch eine witterungsbeständige Fassadenschicht 5 begrenzt ist.

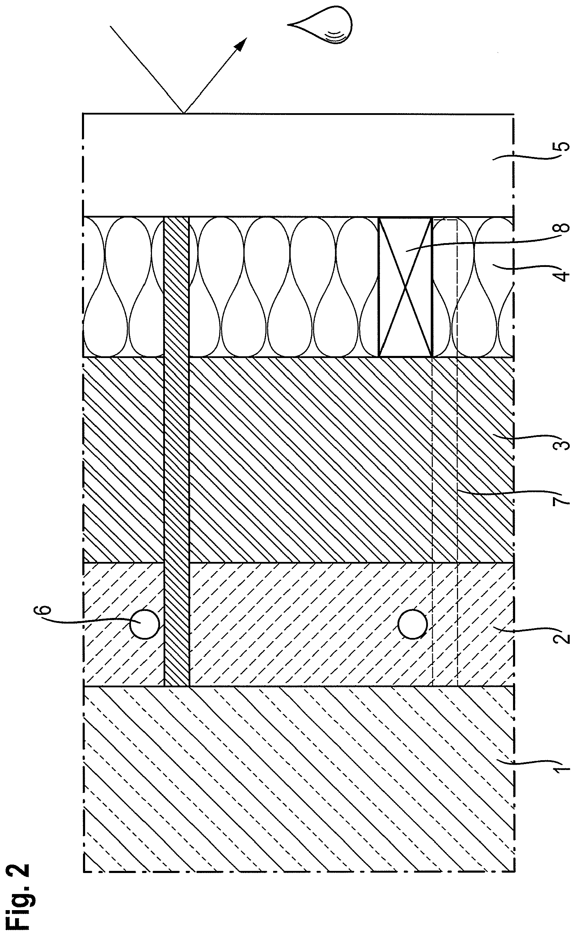

Figur 2 zeigt eine Ausführungsvariante mit beidseits überstehenden Stabdübeln. Die Dübel 7 stehen wie in der erstehen abgebildeten Ausführungsvariante an der Trägerschicht 1 auf. Sie sind wieder in gegenseitig versetzten Reihen angeordnet und verlaufen von der Verbindungsschicht 2 über die Holzschicht 3 auch durch die zusätzliche Dämmschicht 4, wobei letztere als Einblasdämmung realisiert ist. Sie stehen an der Fassadenschicht 5 an und verhindern damit insbesondere während der Konstruktion das Zusammenrücken der zusätzlichen Dämmschicht 4 durch die Fassadenschicht 5. Das Absinken der Dämmfüllung ist durch ein querlaufendes Stützelement 8 in Form eines Trägers verhindert.

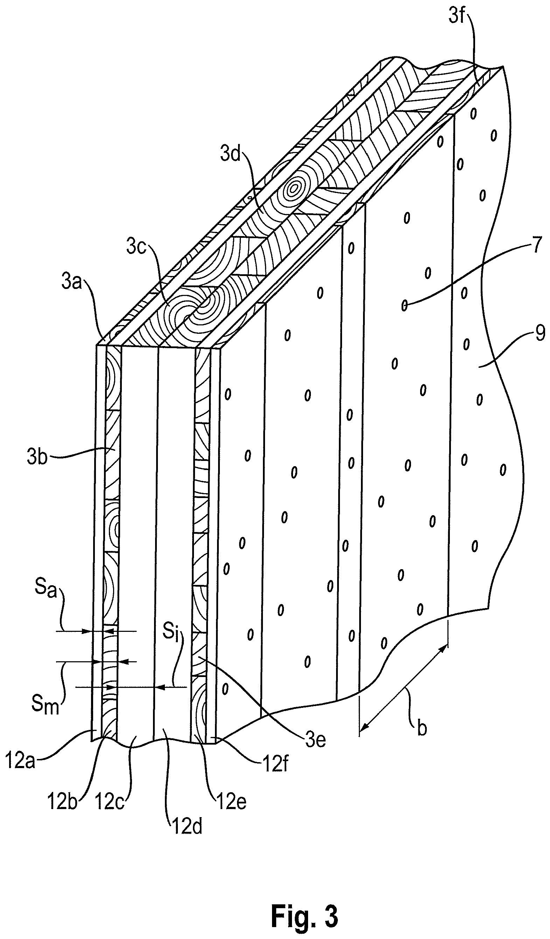

Figur 3 zeigt ein Schichtholzelement 9, wie sie zum Beispiel aus EP 1 097 032 B1 bekannt sind. Das einstoffliche Schichtholzelement 9 besteht aus mehreren Lagen 12a, 12b, 12c, 12d, 12e und 12f von Hölzern 3a, 3b, 3c, 3d, 3e und 3f. Dabei weisen Hölzer 3a, 3b und 3c bzw. 3d, 3e und 3f von benachbarten Lagen 12a, 12b, 12c bzw. 12d, 12e und 12f unterschiedliche Richtungen auf. Die Hölzer 3c und 3d der inneren Lagen 12c und 12d sind als Pfosten ausgebildet, die gleich orientiert sind. Die Stärke der Hölzer 3c, 3d der inneren Lagen 12c und 12d ist grösser als die Starke sₐ und sₘ der Hölzer 12a, 12b bzw. 12e und 12f der äußeren Lagen 3a, 3b bzw. 3e und 3f.

Die Lagen 12a bis 12f sind durch Dübel 7 miteinander verbunden, welche etwa normal zu den Lagen 12a bis 12f in die Hölzer 3a bis 3f eingesteckt werden. Die Dübel 7 sind rasterartig angeordnet.

Die Stärke sᵢ, sₐ, sₘ der Lagen 12a bis 12f kann je nach Verwendungszweck und statischen Anforderungen zwischen 8 mm und 120 mm variiert und beliebig kombiniert werden. Eine besondere Verbindungsqualität zwischen den einzelnen Lagen 12a bis 12f und den Dübeln 7 wird erzielt, indem Holzfeuchteunterschiede zwischen Dübel 7 und den Hölzern 3a bis 3f gezielt eingesetzt werden. Die Dübel 7 werden entsprechend stärker getrocknet als die Hölzer 3a bis 3f und nehmen dadurch zum Feuchteausgleich nach der Verdübelung Wasser vom umgebenden Holz auf. Dies bewirkt eine Volumensausdehnung und eine ausgezeichnete Verkeilung und Auszugsfestigkeit der Dübel 7. Die Durchmesser der Dübel 7 können je nach Elementstärke und Verwendung zwischen 8 und 40 mm betragen. Die Dübellänge variiert von der Stärke einiger Lagen 12a bis 12f bis zur Stärke des gesamten Schichtholzelementes 9.

Mehrere Schichtholzelemente 9 können miteinander durch herkömmliche Nut/Feder, Überblattungs- bzw. Schwalbenschwanzfräsungen oder durch Schrauben zu Dach- und Wandelementen verbunden werden. Auch Eckverbindungen sind auf diese Weise möglich. Für Eckverbindungen werden zusätzlich große, bis 100 mm starke Dübel nach dem beschriebenen Prinzip des gezielten Holzfeuchteunterschiedes eingesetzt.

## Patentansprüche

1. Wand für ein Gebäude, wobei die Wand mehrere Schichten aufweist, mit zumindest einer Holzschicht (3) und mit zumindest einer Trägerschicht (1) aus im Wesentlichen anorganischem Material, wobei zwischen Trägerschicht (1) und Holzschicht (3) eine Verbindungsschicht (2) angeordnet ist und die Verbindungsschicht (2) Leitungen (6) zum Wärmeaustausch enthält und die Verbindungsschicht (2) eine thermisch leitfähige Gussschicht wie Vergussbeton aufweist, **dadurch gekennzeichnet, dass** die Holzschicht (3) von der Trägerschicht (1) mit Distanzelementen beabstandet ist und dass die Distanzelemente zumindest teilweise als Holzschrauben aus Holz ausgeführt sind, die als Verbindungselemente in der Holzschicht (3) vorgesehen sind, und/oder die Distanzelemente zumindest teilweise als Dübel (7) ausgeführt sind, die als Verbindungselemente in der Holzschicht (3) vorgesehen sind, wobei die Dübel (7) aus Holz hergestellt sind.

2. Wand nach Anspruch 1, **dadurch gekennzeichnet, dass** die Holzschicht (3) außerhalb der Trägerschicht (1) des Gebäudes angeordnet ist.

3. Wand nach Anspruch 1 oder 2, **dadurch gekennzeichnet, dass** die Leitungen (6) großflächig angeordnet sind, so dass sie einen Großteil eines Längsschnitts der Wand einnehmen.

4. Wand nach einem der Ansprüche 1 bis 3, **dadurch gekennzeichnet, dass** die Leitungen (6) hydraulisch mit einer Kühleinrichtung und/oder mit einer Heizeinrichtung verbunden sind.

5. Wand nach einem der Ansprüche 1 bis 4, **dadurch gekennzeichnet, dass** die Leitungen (6) um die Distanzelemente herum angeordnet sind.

6. Wand nach einem der Ansprüche 1 bis 5, **dadurch gekennzeichnet, dass** eine weitere Dämmschicht (4) vorgesehen ist.

7. Wand nach einem der Ansprüche 1 bis 6, **dadurch gekennzeichnet, dass** die Holzschicht (3) zumindest ein vorgefertigtes, vorzugsweise einstoffliches Schichtholzelement (9) aufweist, mit zumindest drei miteinander verbundenen Lagen (12a, 12b, 12c, 12d, 12e, 12f) von unmittelbar nebeneinander angeordneten brett- oder pfostenartigen Hölzern, von denen zumindest zwei benachbarte Lagen (12a, 12b, 12c, 12d, 12e, 12f) jeweils unterschiedliche Richtungen aufweisen.

8. Wand nach Anspruch 7, **dadurch gekennzeichnet, dass** die Lagen (12a, 12b, 12c, 12d, 12e, 12f) jeweils durch Dübel (7) oder Holzschrauben verbunden sind, welche die Lagen (12a, 12b, 12c, 12d, 12e, 12f) von Hölzern im Wesentlichen normal durchsetzen.

9. Wand nach Anspruch 7 oder 8, **dadurch gekennzeichnet, dass** zumindest eine innere Lage (12c, 12d) durch Pfosten gebildet ist.

10. Wand nach einem der Ansprüche 8 bis 9, **dadurch gekennzeichnet, dass** das Schichtholzelement (9) zumindest eine Verbindungskante aufweist und dadurch mit zumindest einem benachbarten Schichtholzelement (9) verbindbar ist mit vorzugsweise einer Nut/Feder, oder über Blattung, Schwalbenschwanz und/oder Schrauben.

11. Verfahren zur Fertigung einer Gebäudehülle mit mehreren Schichten, bei dem zunächst eine Trägerschicht (1) aus im Wesentlichen anorganischem Material hergestellt wird, danach darauf eine Holzschicht (3) aufgebracht wird, wobei zwischen der Trägerschicht (1) und der Holzschicht (3) Leitungen (6) zum Wärmeaustausch angeordnet werden, wobei in einen Hohlraum zwischen Holzschicht (3), Distanzelementen und Trägerschicht (1) eine thermisch leitfähige Gussschicht wie Vergussbeton vergossen wird, **dadurch gekennzeichnet, dass** vor dem Anbringen der Holzschicht (3) auf die Trägerschicht (1) die Holzschicht (3) mit Distanzelementen mit kleiner Querschnittsfläche bestückt wird und dass bei der Bestückung der Holzschicht (3) als Distanzelemente entweder aus Holz bestehende Dübel oder Holzschrauben aus Holz verwendet werden.

## Claims

1. Wall for a building, wherein the wall has a plurality of layers, having at least one wood layer (3) and at least one carrier layer (1) of essentially inorganic material, wherein a connecting layer (2) is arranged between the carrier layer (1) and the wood layer (3) and the connecting layer (2) contains lines (6) for heat exchange and the connecting layer (2) has a thermally conductive casting layer such as casting concrete, **characterised in that** the wood layer (3) is spaced from the carrier layer (1) with spacer elements, and **in that** the spacer elements are at least partly designed as wood screws made of wood, which are provided as connecting elements in the wood layer (3), and/or the spacer elements are at least partly designed as dowels (7), which are provided as connecting elements in the wood layer (3), wherein the dowels (7) are made of wood.

2. Wall according to claim 1, **characterised in that** the wood layer (3) is arranged outside the carrier layer (1) of the building.

3. Wall according to claim 1 or 2, **characterised in that** the lines (6) are arranged over a large area so that they occupy a large part of a longitudinal section of the wall.

4. Wall according to one of claims 1 to 3, **characterised in that** the lines (6) are hydraulically connected to a cooling device and/or to a heating device.

5. Wall according to one of claims 1 to 4, **characterised in that** the lines (6) are arranged around the spacer elements.

6. Wall according to one of claims 1 to 5, **characterised in that** a further insulating layer (4) is provided.

7. Wall according to one of claims 1 to 6, **characterised in that** the wood layer (3) comprises at least one prefabricated, preferably mono-material laminated wood element (9), having at least three interconnected layers (12a, 12b, 12c, 12d, 12e, 12f) of board-like or post-like woods arranged directly next to one another, of which at least two adjacent layers (12a, 12b, 12c, 12d, 12e, 12f) each have different directions.

8. Wall according to claim 7, **characterised in that** the layers (12a, 12b, 12c, 12d, 12e, 12f) are each connected by dowels (7) or wood screws which pass through the layers (12a, 12b, 12c, 12d, 12e, 12f) of woods substantially normally.

9. Wall according to claim 7 or 8, **characterised in that** at least one inner layer (12c, 12d) is formed by posts.

10. Wall according to one of claims 8 to 9, **characterised in that** the laminated wood element (9) has at least one connecting edge and is thereby connectable to at least one adjacent laminated wood element (9), preferably with a tongue and groove, or via leafing, dovetail and/or screws.

11. Method for producing a building shell with several layers, in which firstly a carrier layer (1) of essentially inorganic material is produced, then a wood layer (3) is applied thereto, wherein lines (6) for heat exchange are arranged between the carrier layer (1) and the wood layer (3), wherein a thermally conductive casting layer such as casting concrete is cast in a cavity between wood layer (3), spacer elements and carrier layer (1), **characterised in that** before the wood layer (3) is applied to the carrier layer (1), the wood layer (3) is fitted with spacer elements having a small cross-sectional area, and **in that** either dowels consisting of wood or wood screws consisting of wood are used as spacer elements when fitting the wood layer (3).

## Revendications

1. Mur de bâtiment, ce mur comprenant plusieurs couches avec au moins une couche de bois (3) et au moins une couche porteuse (1) en un matériau essentiellement anorganique,
une couche de liaison (2) étant prévue entre la couche porteuse (1) et la couche en bois (3) et cette couche de liaison (2) comporte des conduites (6) pour l'échange thermique et la couche de liaison (2) comporte une couche coulée thermo-conductrice telle que du béton coulé,
paroi **caractérisée en ce que**
- la couche de bois (3) est écartée de la couche porteuse (1) par des éléments d'écartement et,
- les éléments d'écartement sont au moins en partie des vis à bois réalisées en bois qui constituent les éléments de liaison dans la couche de bois (3) et/ou les éléments d'écartement sont au moins en partie réalisés sous la forme de chevilles (7) prévues comme éléments de liaison dans la couche de bois (3),
les chevilles (7) étant en bois.

2. Mur selon la revendication 1,
**caractérisée en ce que**
la couche de bois (3) est à l'extérieur de la couche porteuse (1) du bâtiment.

3. Mur selon la revendication 1 ou 2,
**caractérisée en ce que**
les conduites (6) sont réparties sur une grande surface pour ouvrir une partie importante de la coupe longitudinale du mur.

4. Mur selon l'une des revendications 1 à 3,
**caractérisée en ce que**
les conduites (6) sont reliées de manière hydraulique à une installation de refroidissement et/ou une installation de chauffage.

5. Mur selon l'une des revendications 1 à 4,
**caractérisée en ce que**
les conduites (6) entourent les éléments d'écartement.

6. Mur selon l'une des revendications 1 à 5,
**caractérisée en ce qu'**
il est prévu une autre couche d'isolation (4).

7. Mur selon l'une des revendications 1 à 6,
**caractérisée en ce que**
la couche de bois (3) comporte au moins un élément à couches de bois (9) préfabriqué, de préférence en une seule matière, avec au moins trois couches (12a, 12b, 12c, 12d, 12e, 12f) reliées entre elles, de planches et de poteaux en bois, directement juxtaposés, et parmi lesquelles au moins deux couches voisines (12a, 12b, 12c, 12d, 12e, 12f) ont des orientations respectives différentes.

8. Mur selon la revendication 7,
**caractérisée en ce que**
les couches (12a, 12b, 12c, 12d, 12e, 12f) sont reliées respectivement par des chevilles (7) ou des vis à bois qui traversent les couches (12a, 12b, 12c, 12d, 12e, 12f) de bois, pratiquement dans la direction normale.

9. Mur selon la revendication 7 ou 8,
**caractérisée en ce qu'**
au moins une couche intérieure (12c, 12d) est formée par des poteaux.

10. Mur selon l'une des revendications 8 à 9,
**caractérisée en ce que**
les éléments de couches de bois (9) ont au moins une arête de liaison et sont ainsi susceptibles d'être reliées à au moins un élément de couches en bois (9), voisin, avec de préférence une liaison rainure languette ou feuillure ou queue d'aronde et/ou des vis.

11. Procédé de réalisation d'une enveloppe de construction emportant plusieurs couches consistant à réaliser tout d'abord une couche porteuse (1) en un matériau essentiellement anorganique, puis sur celle-ci une couche de bois (3),
- avec entre la couche porteuse (1) et la couche de bois (3) des conduites (6) pour l'échange thermique,
- une couche coulée thermo-conductrice telle que du béton coulé dans l'espace entre la couche de bois (3), les éléments d'écartement et la couche porteuse (1),
**caractérisé en ce qu'**
avant d'appliquer la couche de bois (3) sur la couche porteuse (1) on garnit la couche de bois (3) avec des éléments d'écartement ayant une plus petite surface de section et,
pour garnir la couche de bois (3) on utilise comme élément d'écartement soit des chevilles en bois ou des vis à bois, en bois.
